# EUROPEAN PATENT SPECIFICATION

(11) **EP 2 671 791 B1**
(45) Date of publication and mention of the grant of the patent: **18.07.2018**
(21) Application number: 12170734.3
(22) Date of filing: 04.06.2012
(51) Int. Cl.: B63H 21/30, F16F 7/108

(54) **Damped engine support**
Gedämpfte Motoraufhängung
Support amortisseir de moteur

(43) Date of publication of application: 11.12.2013
(73) Proprietor: Caterpillar Motoren GmbH & Co. KG, 24159 Kiel (DE)
(72) Inventor: Aeffner, Kurt, 24161 Altenholz (DE)
(74) Representative: BRP Renaud & Partner mbB Rechtsanwälte Patentanwälte Steuerberater

(56) References cited:
- EP-A1- 2 436 594
- DE-B3-102010 034 145
- DE-U1- 29 600 928
- US-A- 2 059 220

## Description

### Technical Field

The present disclosure generally refers to an engine support and more particularly to a double resilient mounting for an internal combustion engine unit.

### Background

During operation of internal combustion engines, and in particular of large internal combustion engines used in marine applications and in power plants, strong mechanical vibrations and loud noise occur. As mechanical vibrations may be dampened comparably easy by mounting an internal combustion engine unit on a massive foundation, dampening noise is more challenging.

The noise may be emitted by the large internal combustion engine and the foundation supporting the large internal combustion engine. In detail, internal combustion engine may transmit structure borne noise to a foundation, and internal combustion engine as well as foundation may emit air borne noise. Further, in the case of a large internal combustion engine supported on a foundation within a ship, the ship foundation may emit air borne noise to the sea.

Air borne noise may lead to noise pollution of the environment. Thus, technicians in a power plant, or passengers and crew in a ship may be disturbed. Further, maritime life may be disturbed by air borne noise in the water.

In another aspect, air borne noise may lead to measuring interferences of sensitive measuring equipment. For example, research and exploration measurements discovering maritime life, or searching for fishing grounds or oil fields may be affected.

Therefore, it is an object of engine, ship and power plant manufacturers to dampen low frequency mechanical vibrations and structure borne noise generated by large internal combustion engines. Various approaches of engine mountings have been developed.

A well known approach may be a double resilient mounting, which may, in particular, effectively dampen structure borne noise. Those double resilient mountings may comprise upper resilient mountings supporting an internal combustion engine unit on a countermeasure and lower resilient mounting supporting the countermeasure on a foundation.

For example, EP 1 847 456 A2 may relate to an equipment platform for supporting vibration generating equipment such as pumps, generators and the like, within a ship. The equipment platform may have an upper surface for receiving the vibration generating equipment and may be held by a base frame by means of first resilient elements, which may be fitted between the equipment platform and the base frame. Second resilient elements may be fitted between base frame and a mounting surface within the ship. However, the base frame may be only a ring and does not provide a counterweight section. Thus, a mass required to result in the desired damping behavior of a large internal combustion engine unit is not provided.

For example, DE 39 30 514 A1 may disclose a ship engine mount by means of which the ship engine may be supported by upper elastic elements on a carrier. The carrier may be supported on the ship foundation by lower elastic elements arranged near the bottom of the ship. In contrast to the present disclosure, the distance between upper and lower elastic elements may be relatively large (at least 1 m to 1.20 m). Therefore, lower elastic elements may be positioned considerably far away from a combined gravity center of ship engine and carrier. This may result in a long lever arm, which may cause big dynamic movements of an internal combustion engine.
As a further example, US 2,059,220 A which is considered to be the closest prior art, discloses an engine elastically supported on an engine bed. Said engine bed is shaped to receive the engine so that any fuel or lubricating oil spilled from the engine is collected. Thus, the fire hazard is greatly minimized. In the event of fire, the engine bed allows to quickly and easily extinguish the flames as the combustible liquids are retained therein. Further, the engine bed protects an engine crank case and a reverse gear housing from bilge water to reduce corrosion of those devices.

The present disclosure is directed, at least in part, to improving or overcoming one or more aspects of prior systems.

### Summary of the Disclosure

According to an aspect of the present disclosure, an engine support system for supporting an internal combustion engine unit may comprise a support structure that may have a counterweight section and a top section. The top sections may be provided with outer mounting sections each having an upper face and a lower face. The engine support system may further comprise a plurality of upper resilient mountings that may be arranged at the upper faces of outer mounting sections for supporting the internal combustion engine unit, and a plurality of lower resilient mountings that may be arranged at the lower faces of the outer mounting sections for supporting the support structure.

According to another aspect of the present disclosure, an engine arrangement may comprise an engine support system, a foundation, and an internal combustion engine unit. The internal combustion engine unit may be resiliently supported by the engine support system on the foundation, for example, interacting with projections of the foundation. The engine support system may comprise a support structure that may have a counterweight section and a top section with outer mounting sections each having an upper face and a lower face. The engine support system may further comprise a plurality of upper resilient mountings that may be arranged at the upper faces of the outer mounting sections for supporting the internal combustion engine unit, and a plurality of lower resilient mountings that may be arranged at the lower faces of the outer mounting sections for supporting the support structure on the foundation.

In some exemplary embodiments according to the present disclosure, the outer mounting sections may be formed plate-like and/or may have a thickness in the range from 20 mm to 100 mm, for example 30 mm, 40 mm, 55 mm, or 65 mm. For example, the outer mounting sections may be opposed to each other with respect to a longitudinal axis of the engine support system.

In some exemplary embodiments according to the present disclosure, the top section may extend generally upwards within the upper 25 % of the support structure.

In some exemplary embodiments according to the present disclosure, the support structure may have a height and the top section may extend vertically within the upper 25 % of the height of the support structure.

Other features and aspects of this disclosure will be apparent from the following description and the accompanying drawings.

### Brief Description of the Drawings

Fig. 1 shows a schematic drawing of an internal combustion engine unit supported on a engine support system in a frontal view; and
Fig. 2 shows a schematic drawing of an internal combustion engine unit supported on a engine support system in a side view.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure may be based in part on the realization that, operation of vibrating, large internal combustion engines supported by double resilient mountings may lead to big dynamic movements of the supported engine and the countermeasure, for example a counterweight. Those big dynamic movements may be caused by soft resilient mountings with low spring constants, which are typically used in double resilient mounting systems.

Those big dynamic movements may lead to increased material stress that may result in increased material wear of resilient mountings and corresponding engaging members. Furthermore, increased material stress and wear may affect elastic couplings, for example, between internal combustion engine unit and generator, and of supply and drain pipes connected to the vibrating internal combustion engine unit. This may result in a shortened lifetime and/or may require shortened maintenance intervals for all affected parts. Thus, double resilient mounting systems of internal combustion engines may be very cost-intensive not only when installing, but also during service life.

Accordingly, it is proposed to support an internal combustion engine unit in such a way that mechanical vibrations and structure borne noise may be dampened by a double resilient mounting that may keep the dynamic movements of a supported internal combustion engine unit and a countermeasure (counterweight) small.

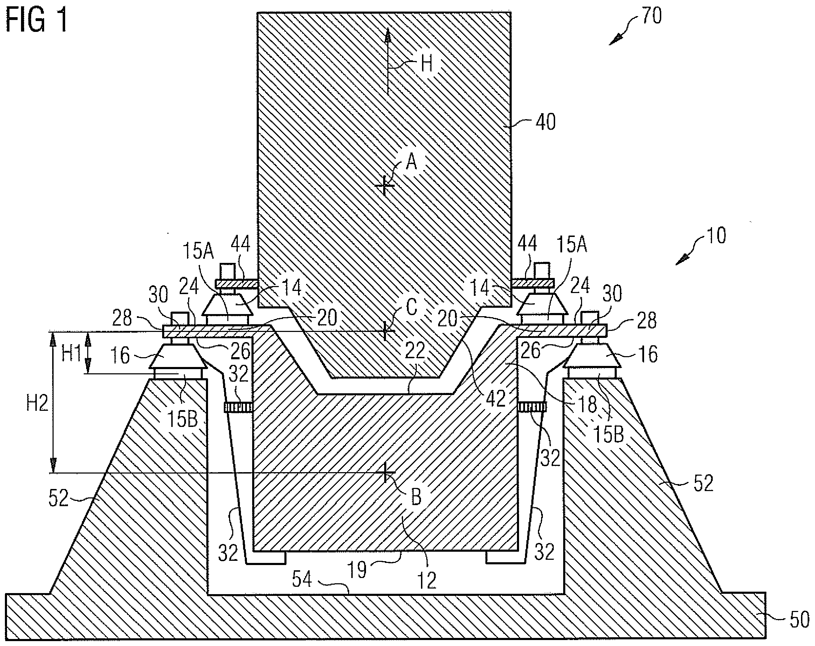

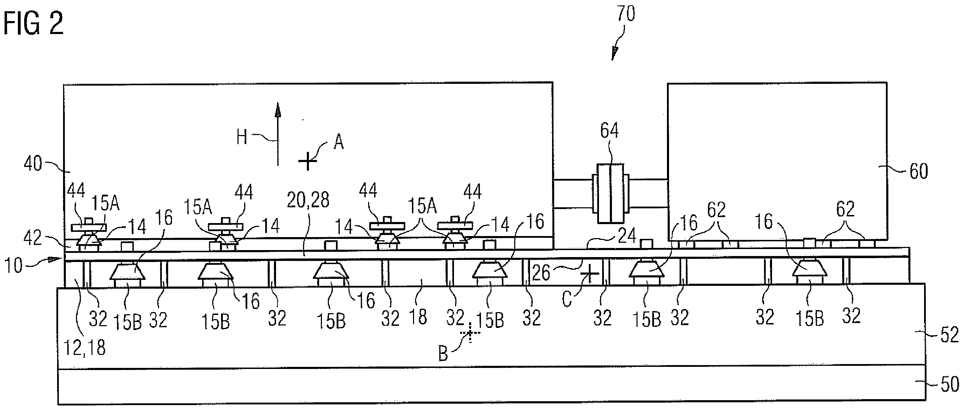

An exemplary embodiment of an engine support system comprising a support structure and upper and lower resilient mountings is described in the following with reference to Figs. 1 and 2.

Internal combustion engine unit 40 may be supported by engine support 10 on foundation 50. Internal combustion engine unit 40 may comprise a combustion unit with one or more cylinders. The combustion unit may be, for example, a diesel, heavy fuel, crude oil, and/or gas powered combustion unit. The cylinders may be arranged, for example, in an in-line, V, W, or any other known configuration. Generally, the supported internal combustion engine unit may be a large, diesel, heavy fuel, crude oil, or dual fuel internal combustion engine for marine ships, power plants, or for offshore applications such as an oil rig.

Engine support system 10 may comprise a support structure 12, a plurality of upper resilient mountings 14, and a plurality of lower resilient mountings 16.

Support structure 12 may have a top section 18 and a counterweight section 19. Top section 18 may comprise opposed plate-like opposed outer mounting sections 20. Plate-like opposed outer mounting sections 20 may protrude outwards, for example in a direction that is horizontal in the mounted state. The top section and/or the counterweight section may further comprise an recess 22. Recess 22 may be a recessed portion and may be arranged between plate-like opposed outer mounting sections 20. For example, an oil pan 42 of the internal combustion engine unit 40 may protrude into the recess 22.

Each plate-like opposed outer mounting section 20 may have an upper face 24 and a lower face 26. Upper resilient mountings 14 may be arranged at the upper faces 24 of the plate-like opposed outer mounting sections 20. Lower resilient mountings 16 may be arranged at the lower faces 26 of the plate-like opposed outer mounting sections 20.

Due to the nature of the present disclosure, it is of considerable importance that plate-like opposed outer mounting sections 20protrude outwards of the top section 18. Top section 18 may be arranged above counterweight section 19. For example, in some embodiments, top section 18 extends vertically not more than the upper 25 % of the height of support structure 12.

In some embodiments, at least one lower resilient mountings 16 may be arranged closer than to outer periphery 28 of plate-like opposed outer mounting sections 20 than one of the upper resilient mountings 14, or as close to outer periphery 28 as one of the upper resilient mountings 14.

Plate-like opposed outer mounting sections 20 may further comprise a plurality of engaging members 30 in some embodiments. Those engaging members 30 may engage with a corresponding lower resilient mounting 16.

In a few embodiments, a plurality of reinforcing fins 32 may extend along the counterweight section 19 and the top section 18 for strengthening the rigidity of support structure 12. For example, reinforcing fins 32 may extend vertically or horizontally along support structure 12.

In some embodiments, support structure 12 may further be configured as oil tank that is arranged in the counterweight section 19 for providing lubricant, such as oil, to the internal combustion engine unit 40.

Internal combustion engine unit 40 may further comprise a plurality of engaging members 44 in some embodiments. Those engaging members 42 may be arranged at opposed faces of internal combustion engine unit 40 and may engage with a corresponding upper resilient mounting 14.

Support structure 12 may be suspended between opposed lower resilient mountings 16. Opposed lower resilient mountings 16 may refer to lower resilient mountings 16 arranged at lower faces 26 of aforementioned plate-like opposed outer mounting sections 20.

Support structure 12 may be a steel structure.

In some embodiments, lower resilient mountings 16 may be arranged on foundation 50. For example, lower resilient mountings may be arranged on projections 52 of foundation 50 such that support structure 12 may be suspended between opposed lower resilient mountings 16 in central recess 54 of foundation 50. Foundation 50 may be, for example, a foundation of a ship or a power plant.

Upper and lower resilient mountings 14, 16 may comprise, for example, a rubber element as a vibration dampening element 15A, 15B. As those rubber elements 15A, 15B may be combined longitudinal, lateral and vertical stoppers to limit the engine movements, they may provide an active isolation of dynamic engine forces and structure borne noise. For example, rubber elements 15A, 15B of upper and lower resilient mountings 14, 16 may have a conical shape.

Upper and lower resilient mountings 14, 16 may further comprise dynamically balanced highly flexible couplings to engage with corresponding engaging members, such as engaging members 44 of internal combustion engine unit 40 and engaging members 30 of plate-like opposed outer mounting sections.

Beside the dampening and isolation of mechanical vibrations and structure borne noise, upper and lower resilient mountings 14, 16 may carry a vertical load in a combination of compression and shear of the rubber element. That is, upper resilient mountings 14 may carry internal combustion engine unit 40 and lower resilient mountings 16 may carry support structure 12 and internal combustion engine unit 40 supported thereon.

In some embodiments, generator 60 may further be arranged next to internal combustion engine 40 on upper faces 24 of plate-like outer mounting sections 20. For example, generator 60 may be fixedly mounted at upper faces 24 by mounting units 62. Generator 60 may be drivingly coupled to internal combustion engine unit 40 by flexible coupling 64.

### Industrial Applicability

In the following, the basic operation of the above exemplary embodiment of engine support system 10 will be described with reference to Figs. 1 and 2.

During normal operation of internal combustion engine unit 40, fuel may be combusted within a combustion chamber of a cylinder, which may cause movement of a piston and associated piston rod. A series of pistons and piston rods may rotate a crankshaft of internal combustion engine unit 40. Motions of those exemplary moveable parts and others, and combustion itself may generate vibrations within the internal combustion engine unit 40. Those vibrations may be diverted into mechanical vibrations and structure borne noise.

Mechanical vibrations and structure borne noise may be dampened by upper resilient mountings 14 supporting internal combustion engine unit 40, and further transmitted to support structure 12.

Due to mass inertia of a counterweight, mechanical vibrations and structure borne noise may be further dampened. A counterweight may be formed by a mass of the support structure 12 including oil contained therein such that a desired double resilient mounting system is characterized by a mass of the counterweight, a mass of the internal combustion engine unit 40, spring constants of upper resilient mountings 14 between the internal combustion engine unit 40 and the mounting sections 20, and spring constants of lower resilient mountings 16 between the mounting sections 20 and the foundation 50.

The larger a mass of the counterweight may be, the more efficient the dampening by mass inertia may get. In some embodiments, the counterweight may further comprise a mass of a generator 60 that is fixedly mounted on upper faces 24 of plate-like opposed outer mounting sections 20. The counterweight may have at least a mass of 80 % of a mass of internal combustion engine unit 40 supported thereon by upper resilient mountings 14. For example, the counterweight may have a mass of 90 %, 100 %, or 110 % of a mass of internal combustion engine unit 40.

Generally, the term mass of internal combustion engine unit 40 may refer to a mass of internal combustion engine 40 in an operating state, and may comprise, for example, masses of lubricant, such as oil, in oil pan 42, fuel, aggregates, such as pumps or chargers, and internal combustion engine unit 40 itself.

To enable dampening by mass inertia of the counterweight, support structure 12 may be, as outlined before, suspended between lower resilient mountings 16.

Generally, a higher mass of an oscillator may lead to lower natural frequencies of the oscillating system. A higher mass of the counterweight may result in lower natural frequencies of the oscillating system. It may be further possible to fixedly mount additional aggregates (such as pumps) on support structure 12 to increase the mass of the counterweight.

Dampened mechanical vibrations and structure borne noise may be further transmitted by plate-like opposed outer mounting sections 20 to lower resilient mountings 16. Lower resilient mountings 16 may further dampen mechanical vibrations and structure borne noise prior transmittal to foundation 50.

Upper and lower resilient mountings 14, 16 may be arranged close to each other at respective upper and lower faces 24, 26 of the plate-like opposed outer mounting sections 20. The distance may be kept small in a horizontal as well as in a vertical direction. Thus, the lever arm between upper and lower resilient mountings 14, 16 may be kept small, which may lead to merely small dynamic movements of vibrating internal combustion engine unit 40 and coupled support structure 12 along the six degrees of freedom. Those movements along the six degrees of freedom are lateral, longitudinal, vertical, roll, pitch and yaw movements.

For example, in some embodiments, vertical displacement between upper resilient mountings 14 and lower resilient mountings 16 may be kept small due to a small thickness of plate-like opposed outer mounting sections 20. Thickness of plate-like opposed outer mounting sections 20 may be chosen dependent on the supported internal combustion engine unit 40, for example in the range of 20 mm to 100 mm. For example, for smaller internal combustion engine units having a power output between 300 kW and 1000 kW, a thickness of plate-like opposed outer mounting sections 20 may be in the range of 20 mm to 30 mm. In contrast, for larger internal combustion engine units having power outputs of 12.000 kW or more, thickness of plate-like opposed outer mounting sections 20 may be, for example, in the range of 55 mm to 65 mm.

Beside the close arrangement between upper and lower resilient mountings 14 and 16, there may also be a close arrangement between resilient mountings 14, 16, internal combustion engine unit 40 and support structure 12. Thus, upper and lower resilient mountings 14, 16 may be arranged close to a combined gravity center C of internal combustion engine unit 40 and the counterweight. Combined centre of gravity C combines gravity center A of internal combustion engine unit 40 and gravity center B of the counterweight. Lower resilient mountings 16 may have a vertical position at the same or close to the vertical position of gravity centre C in a mounted state. For example, at least one lower resilient mounting 16 may comprise a vibration dampening element 15B, and a vertical distance HI, which is defined in a height direction H of the internal combustion engine unit 40, between at least one vibration dampening element 15B and combined gravity center C is at most 50 % of a vertical distance H2 between gravity center B of the counterweight and combined gravity center C. Such an arrangement may further lead to merely small dynamic movements of vibrating internal combustion engine unit 40 and support structure 12 along the aforementioned six degrees of freedom.

As upper resilient mountings 14 solely support internal combustion engine unit 40 and lower resilient mountings 16 support internal combustion engine unit 40 and the counterweight, the quantity and/or deflection and/or load capacity of lower resilient mountings 16 may be higher than of upper resilient mountings 14.

In some embodiments, the number of upper and lower resilient mountings 14, 16 may be different. In general, a larger number of resilient mountings results in higher natural frequencies of an oscillating system, and a smaller number of resilient mountings results in lower natural frequencies of an oscillating system.

In some embodiments, at least one of upper resilient mountings 14 may have the same or different spring constants than one of a lower resilient mounting 16. In general, higher spring constants result in higher natural frequencies of an oscillating system, and smaller spring constants result in lower natural frequencies of an oscillating system.

As upper resilient mountings 14 are directly to vibrating internal combustion engine unit 40, those upper resilient mountings 14 may further have, for example, higher shock load resistances than lower resilient mountings 16.

Generally, as engine support system 10 may be based on a double resilient mounting, the entire oscillating system may have 12 natural frequencies. The counterweight may be configured in such a way that none of those 12 natural frequencies matches with an excitation frequency of vibrating internal combustion engine unit 40. For example, mass of support structure 12, spring constants and quantity of upper and lower resilient mountings 14, 16 may be chosen to ensure that none of those 12 natural frequencies matches with an excitation frequency of vibrating internal combustion engine unit 40. In some embodiments, the counterweight may further comprise a mass of generator 60.

Furthermore, all 12 natural frequencies may be below an excitation frequency of vibrating internal combustion engine unit 40 such that when starting to operate internal combustion engine unit 40, those 12 natural frequencies of the oscillating system have to be quickly passed. Such an over-critical mounting may have good dampening characteristics due to low natural frequencies as described before.

Still further, the larger the gap between natural frequencies and excitation frequencies is, the better mechanical vibrations and structure borne noise may be dampened. The counterweight may be configured to ensure a considerable large gap, for example, mass of the counterweight, spring constants and quantity of upper and lower resilient mountings 14, 16 may be adapted correspondingly.

Consequently, low natural frequencies may be desirable, and may be achieved, for example, by a high mass of the counterweight, and low spring constants as well as small numbers of resilient mountings 14, 16.

Generally, it should be noted, that terms "natural frequency", "resonance frequency" and "tuning frequency" used in the context of describing an oscillating system may be used synonymously.

Although the preferred embodiments of this invention have been described herein, improvements and modifications may be incorporated without departing from the scope of the following claims.

## Claims

1. An engine support system (10) for supporting an internal combustion engine unit (40), the engine support system (10) comprising:
a support structure (12) having a counterweight section (19) and a top section (18), the top section (18) being provided with a plurality of outer mounting sections (20) each having an upper face (24) and a lower face (26),
a plurality of upper resilient mountings (14) arranged at the upper faces (24) of the outer mounting sections (20) for supporting the internal combustion engine unit (40); and
a plurality of lower resilient mountings (16) arranged at the lower faces (26) of the outer mounting sections (20) for supporting the support structure (12), **characterized in that** the mass of the counterweight is at least 80% of the mass of the internal combustion engine unit (40), for example, about 90%, 100% or 110%.

2. The engine support system (10) of claim 1, the outer mounting sections (20) being plate-like shaped and/or having a thickness in the range from 20 mm to 100 mm, for example 30 mm, 40 mm, 55 mm, or 65 mm.

3. The engine support system (10) of claim 1 or claim 2,
wherein at least one of the outer mounting sections (20) protrudes outwards, for example in a direction that is horizontal in a mounted state.

4. The engine support system (10) according to any one of the preceding claims, wherein the top section (12) extends generally upwardly within the upper 25 % of the support structure (12).

5. The engine support system (10) according to any one of the preceding claims, wherein the support structure (12) further comprises a plurality of reinforcing fins (32) extending along the counterweight section (19) and/or the top section (18) for strengthening rigidity of the support structure (12).

6. The engine support system (10) according to any one of the preceding claims, wherein the top section (18) further comprises an recess (22) for accommodating an oil pan (42) of the internal combustion engine unit (40).

7. The engine support system (10) according to any one of the preceding claims, wherein the support structure (12) is further configured as an oil tank arranged in the counterweight section (19) for providing oil to the internal combustion engine unit (40).

8. The engine support system (10) according to any one of the preceding claims, wherein at least one of the upper resilient mountings (14) is smaller than at least one of the lower resilient mountings (16) and/or at least one of the upper resilient mountings (14) has a different or substantially similar spring constant to one of the lower resilient mountings (16).

9. The engine support system (10) according to any one of the preceding claims, wherein each outer mounting section (20) has an outer periphery (28), and at least one of the lower resilient mountings (16) is arranged closer to the outer periphery (28) than one of the upper resilient mountings (14), or as close to the outer periphery (28) as one of the upper resilient mountings (14).

10. An engine arrangement (70) comprising:
an engine support system (10) according to any one of the preceding claims;
a foundation (50); and
an internal combustion engine unit (40) resiliently supported by the engine support system (10) on the foundation (50).

11. The engine arrangement (70) of claim 10, wherein a counterweight is formed by a mass of the support structure (12) including oil contained therein such that a desired double resilient mounting system is **characterized by** a mass of the counterweight, a mass of the internal combustion engine unit (40), spring constants of upper resilient mountings (14) between the internal combustion engine unit (40) and the mounting sections (20), and spring constants of lower resilient mountings (16) between the mounting sections (20) and the foundation (50).

12. The engine arrangement (70) of claim 11, further comprising a generator (60) fixedly mounted on the upper faces (24) of the outer mounting sections (20) and drivingly coupled to the internal combustion engine unit (40), wherein the generator (60) has a mass and the counterweight further comprises the mass of the generator (60).

13. The engine arrangement (70) according to any one of claims 11 to 12, wherein at least one of the lower resilient mountings (16) comprises a vibration dampening element (15B), and the support structure (12) has a counterweight gravity center (B), and the internal combustion engine unit (40) and the counterweight have a combined gravity center (C), and a vertical distance (H1), which is defined in a height direction (H) of the internal combustion engine unit (40), between the vibration dampening element (15B) and the combined gravity center (C) is at most 50 % of a vertical distance (H2) between the counterweight gravity center (B) and the combined gravity center (C).

14. The engine arrangement (70) according to any one of claims 10 to 13, wherein the foundation (50) comprises a central recess (54) and the support structure (12) is suspended between opposed lower resilient mountings (16) in the central recess (54) of the foundation (50).

## Patentansprüche

1. Motoraufhängungssystem (10) zum Aufhängen einer Verbrennungsmotoreinheit (40), das Motoraufhängungssystem (10) umfassend:
eine Aufhängungsstruktur (12), die einen Gegengewichtsabschnitt (19) und einen oberen Abschnitt (18) aufweist, wobei der obere Abschnitt (18) mit einer Vielzahl von äußeren Halterungsabschnitten (20) versehen ist, die jeweils eine obere Fläche (24) und eine untere Fläche (26) aufweisen,
eine Vielzahl von an den oberen Flächen (24) der äußeren Halterungsabschnitte (20) angeordneten oberen elastischen Halterungen (14) zum Aufhängen der Verbrennungsmotoreinheit (40); und
eine Vielzahl von an den unteren Flächen (26) der äußeren Halterungsabschnitte (20) angeordneten unteren elastischen Halterungen (16) zum Aufhängen der Aufhängungsstruktur (12), **dadurch gekennzeichnet, dass** die Masse des Gegengewichts mindestens 80 % der Masse der Verbrennungsmotoreinheit (40) ist, zum Beispiel ungefähr 90 %, 100 % oder 110 %.

2. Motoraufhängungssystem (10) nach Anspruch 1, wobei die äußeren Halterungsabschnitte (20) plattenartig geformt sind und/oder eine Dicke in dem Bereich von 20 mm bis 100 mm aufweisen, zum Beispiel 30 mm, 40 mm, 55 mm, oder 65 mm.

3. Motoraufhängungssystem (10) nach Anspruch 1 oder Anspruch 2, wobei mindestens einer der äußeren Halterungsabschnitte (20) nach außen vorsteht, zum Beispiel in eine Richtung, die in einem montierten Zustand waagerecht ist.

4. Motoraufhängungssystem (10) nach einem der vorstehenden Ansprüche, wobei der obere Abschnitt (12) sich im Allgemeinen innerhalb von 25% der Aufhängungsstruktur (12) nach oben erstreckt.

5. Motoraufhängungssystem (10) nach einem der vorstehenden Ansprüche, wobei die Aufhängungsstruktur (12) weiter eine Vielzahl von Verstärkungsrippen (32) umfasst, die sich entlang des Gegengewichtsabschnitts (19) und/oder des oberen Abschnitts (18) zur Verstärkung der Steifheit der Aufhängungsstruktur (12) erstrecken.

6. Motoraufhängungssystem (10) nach einem der vorstehenden Ansprüche, wobei der obere Abschnitt (18) weiter eine Aussparung (22) zum Aufnehmen einer Ölwanne (42) der Verbrennungsmotoreinheit (40) umfasst.

7. Motoraufhängungssystem (10) nach einem der vorstehenden Ansprüche, wobei die Aufhängungsstruktur (12) weiter als ein in dem Gegengewichtsabschnitt (19) angeordneter Öltank konfiguriert ist, um die Verbrennungsmotoreinheit (40) mit Öl zu versehen.

8. Motoraufhängungssystem (10) nach einem der vorstehenden Ansprüche, wobei mindestens eine der oberen elastischen Halterungen (14) kleiner als mindestens eine der unteren elastischen Halterungen (16) ist und/oder mindestens eine der oberen elastischen Halterungen (14) eine unterschiedliche oder im Wesentlichen ähnliche Federkonstante zu einer der unteren elastischen Halterungen (16) aufweist.

9. Motoraufhängungssystem (10) nach einem der vorstehenden Ansprüche, wobei jeder der äußeren Halterungsabschnitte (20) eine äußere Peripherie (28) aufweist, und mindestens eine der unteren elastischen Halterungen (16) näher an der äußeren Peripherie (28) als eine der oberen elastischen Halterungen (14) oder so nah an der äußeren Peripherie (28) wie eine der oberen elastischen Halterungen (14) angeordnet ist.

10. Motoranordnung (70) umfassend:
ein Motoraufhängungssystem (10) nach einem der vorstehenden Ansprüche;
ein Fundament (50); und
eine Verbrennungsmotoreinheit (40), die elastisch von dem Motoraufhängungssystem (10) auf dem Fundament (50) aufgehängt ist.

11. Motoranordnung (70) nach Anspruch 10, wobei ein Gegengewicht von einer Masse der Aufhängungsstruktur (12) gebildet ist, darin enthaltenes Öl derart beinhaltend, dass ein erwünschtes doppelt elastisches Halterungssystem durch eine Masse des Gegengewichts, eine Masse der Verbrennungsmotoreinheit (40), Federkonstanten der oberen elastischen Halterungen (14) zwischen der Verbrennungsmotoreinheit (40) und den Halterungsabschnitten (20), und Federkonstanten der unteren elastischen Halterungen (16) zwischen den Halterungsabschnitten (20) und dem Fundament (50) gekennzeichnet ist.

12. Motoranordnung (70) nach Anspruch 11, weiter einen Generator (60) umfassend, der fest auf den oberen Flächen (24) der äußeren Halterungsabschnitte (20) montiert und treibend an die Verbrennungsmotoreinheit (40) gekoppelt ist, wobei der Generator (60) eine Masse aufweist und das Gegengewicht weiter die Masse des Generators (60) aufweist.

13. Motoranordnung (70) nach einem der Ansprüche 11 bis 12, wobei mindestens eine der unteren elastischen Halterungen (16) ein Schwingungsdämpfungselement (15B) umfasst, und die Aufhängungsstruktur (12) einen Gegengewichtsschwerpunkt (B) aufweist, und die Verbrennungsmotoreinheit (40) und das Gegengewicht einen kombinierten Schwerpunkt (C) aufweisen, und ein senkrechter Abstand (H1), der in einer Höhenrichtung (H) der Verbrennungsmotoreinheit (40) definiert ist, zwischen dem Schwingungsdämpfungselement (15B) und dem kombinierten Schwerpunkt (C) höchstens 50 % eines senkrechten Abstands (H2) zwischen dem Gegengewichtsschwerpunkt (B) und dem kombinierten Schwerpunkt (C) beträgt.

14. Motoranordnung (70) nach einem der Ansprüche 10 bis 13,
wobei das Fundament (50) eine zentrale Aussparung (54) umfasst und die Aufhängungsstruktur (12) zwischen gegenüberliegenden unteren elastischen Halterungen (16) in der zentralen Aussparung (54) des Fundaments (50) schwebend ist.

## Revendications

1. Système de support de moteur (10) pour supporter une unité de moteur à combustion interne (40), le système de support de moteur (10) comprenant :
une structure de support (12) ayant une section de contrepoids (19) et une section supérieure (18), la section supérieure (18) étant pourvue d'une pluralité de sections de montage externes (20) ayant chacune une face supérieure (24) et une face inférieure (26) ;
une pluralité de montures élastiques supérieures (14) agencées sur les faces supérieures (24) des sections de montage externes (20) pour supporter l'unité de moteur à combustion interne (40) ; et
une pluralité de montures élastiques inférieures (16) agencées sur les faces inférieures (26) des sections de montage externes (20) pour supporter la structure de support (12), **caractérisé en ce que** la masse du contrepoids est d'au moins 80% de la masse de l'unité de moteur à combustion interne (40), par exemple, d'environ 90 %, 100% ou 110%.

2. Système de support de moteur (10) selon la revendication 1, les sections de montage externes (20) étant en forme de plaque et/ou ayant une épaisseur dans la plage de 20 mm à 100 mm, par exemple de 30 mm, de 40 mm, de 55 mm ou de 65 mm.

3. Système de support de moteur (10) selon la revendication 1 ou la revendication 2, dans lequel au moins l'une des sections de montage externes (20) fait saillie vers l'extérieur, par exemple dans une direction qui est horizontale à l'état monté.

4. Système de support de moteur (10) selon l'une quelconque des revendications précédentes, dans lequel la section supérieure (12) s'étend de manière générale vers le haut dans les 25 % supérieurs de la structure de support (12).

5. Système de support de moteur (10) selon l'une quelconque des revendications précédentes, dans lequel la structure de support (12) comprend en outre une pluralité d'ailettes de renfort (32) s'étendant le long de la section de contrepoids (19) et/ou de la section supérieure (18) pour renforcer la rigidité de la structure de support (12).

6. Système de support de moteur (10) selon l'une quelconque des revendications précédentes, dans lequel la section supérieure (18) comprend un évidement (22) pour recevoir un carter à huile (42) de l'unité de moteur à combustion interne (40).

7. Système de support de moteur (10) selon l'une quelconque des revendications précédentes, dans lequel la structure de support (12) est en outre configurée sous la forme d'un réservoir d'huile agencé dans la section de contrepoids (19) pour fournir de l'huile à l'unité de moteur à combustion interne (40).

8. Système de support de moteur (10) selon l'une quelconque des revendications précédentes, dans lequel au moins l'une des montures élastiques supérieures (14) est plus petite qu'au moins l'une des montures élastiques inférieures (16) et/ou au moins l'une des montures élastiques supérieures (14) a une constante de ressort différente ou sensiblement similaire à celle de l'une des montures élastiques inférieures (16).

9. Système de support de moteur (10) selon l'une quelconque des revendications précédentes, dans lequel chaque section de montage externe (20) a une périphérie externe (28), et au moins l'une des montures élastiques inférieures (16) est agencée plus près de la périphérie externe (28) que l'une des montures élastiques supérieures (14) ou aussi près de la périphérie externe (28) que l'une des montures élastiques supérieures (14).

10. Agencement de moteur (70) comprenant :
un système de support de moteur (10) selon l'une quelconque des revendications précédentes ;
une assise (50) ; et
une unité de moteur à combustion interne (40) supportée de manière élastique par le système de support de moteur (10) sur l'assise (50).

11. Agencement de moteur (70) selon la revendication 10, dans lequel un contrepoids est formé par une masse de la structure de support (12) comprenant de l'huile qui y est contenue de sorte que le double système de montage élastique souhaité soit **caractérisé par** une masse du contrepoids, une masse de l'unité de moteur à combustion interne (40), des constantes de ressort de montures élastiques supérieures (14) entre l'unité de moteur à combustion interne (40) et les sections de montage (20) et des constantes de ressort de montures élastiques inférieures (16) entre les sections de montage (20) et l'assise (50).

12. Agencement de moteur (70) selon la revendication 11, comprenant en outre un générateur (60) monté fixe sur les faces supérieures (24) des sections de montage externes (20) et couplé en entraînement à l'unité de moteur à combustion interne (40), dans lequel le générateur (60) a une masse et le contrepoids comprend en outre la masse du générateur (60).

13. Agencement de moteur (70) selon l'une quelconque des revendications 11 à 12, dans lequel au moins l'une des montures élastiques inférieures (16) comprend un élément d'amortissement de vibrations (15B), et la structure de support (12) a un centre de gravité de contrepoids (B), et l'unité de moteur à combustion interne (40) et le contrepoids ont un centre de gravité combiné (C), et une distance verticale (H1), qui est définie dans le sens de la hauteur (H) de l'unité de moteur à combustion interne (40), entre l'élément d'amortissement de vibrations (15B) et le centre de gravité combiné (C) est au maximum de 50 % d'une distance verticale (H2) entre le centre de gravité de contrepoids (B) et le centre de gravité combiné (C).

14. Agencement de moteur (70) selon l'une quelconque des revendications 10 à 13, dans lequel l'assise (50) comprend un évidement central (54) et la structure de support (12) est suspendue entre des montures élastiques inférieures opposées (16) dans l'évidement central (54) de l'assise (50).
